# FASCICULE DE BREVET EUROPEEN

(11) **EP 0 538 091 B1**
(45) Date de publication et mention de la délivrance du brevet: **31.01.1996**
(21) Numéro de dépôt: 92402705.5
(22) Date de dépôt: 05.10.1992
(51) Int. Cl.: A01N 65/00, C05F 11/00

(54) **Nouvelles compositions dérivées d'algues marines, leurs procédés de préparation et applications dans les domaines agricoles**
Neue Zusammensetzungen von Meeresalgenderivaten, Verfahren zu ihrer Herstellung und Verwendungen in der Landwirtschaft
New compositions of marine algae derivatives, process to obtain them and applications in agriculture

(30) Priorité: 08.10.1991 FR 9112368
(43) Date de publication de la demande: 21.04.1993
(73) Titulaire: LABORATOIRES GOEMAR, F-35413 Saint-Malo (FR)
(72) Inventeur: Yvin, Jean-Claude, F-35400 Saint-Malo (FR); Chabot, René, F-85000 La Roche sur Yon (FR)
(74) Mandataire: Hubert, Philippe

(56) Documents cités:
- EP-A- 0 253 035
- WO-A-91/07946
- FR-A- 2 593 067
- US-A- 4 125 392
- DATABASE WPIL Week 8709, 7 Novembre 1985 Derwent Publications Ltd., London, GB; AN 85-319798
- DATABASE WPIL Week 9213, 17 Février 1992 Derwent Publications Ltd., London, GB; AN 92-102149
- Week 8220, 8 Avril 1982 Derwent Publications Ltd., London, GB; AN 82-40185E

## Description

La présente invention a pour objet de nouvelles compositions dérivées d'algues marines, leur procédé de préparation ainsi que leurs applications dans le domaine agricole.

On sait que de nombreuses compositions dérivées d'algues marines ont été proposées dans le domaine agricole, notamment comme stimulant de croissance, correcteur de carence et anti-stress par voie foliaire.

La présente invention résulte de la découverte de nouvelles compositions dérivées d'algues marines présentant une activité de type systémique originale sur les grandes fonctions physiologiques des végétaux, photosynthèse et respiration, en augmentant leur potentiel énergétique, et particulièrement intéressante notamment, en ce qui concerne l'accélération de la croissance des plantes, l'élongation cellulaire et la germination des graines.

Les compositions conformes à l'invention trouveront donc application dans le domaine agricole pour augmenter la qualité et le rendement des productions en intervenant spécifiquement sur certaines fonctions physiologiques des végétaux, par exemple en améliorant les métabolismes photosynthétiques et respiratoires. Ces compositions pourront ainsi être utilisées pour la préparation de solutions d'enrobage pour semence, d'engrais liquides ou encore de solutions à appliquer sur les feuilles d'une plante.

Ces nouvelles compositions sont susceptibles d'être obtenues par la mise en oeuvre d'un procédé comprenant l'hydrolyse basique d'au moins une algue brune, de préférence choisie parmi les fucales ou les laminariales, en présence d'un réducteur comme par exemple un borohydrure de métal alcalin, à une température comprise entre environ 50°C et 100°C, et de préférence d'environ 80°C, pendant une durée comprise entre 4 et 8 h, de préférence d'environ 6 h ; ladite hydrolyse étant suivie d'une neutralisation, de préférence par l'addition d'un acide fort jusqu'à l'obtention d'un pH compris entre environ 6 et 8, puis d'une filtration de préférence sur une membrane minérale dont le diamètre de pore est d'environ 0,45 µm, éventuellement d'une diafiltration ou d'une électrodialyse du perméat ainsi obtenu, et éventuellement une réduction à sa poudre du perméat obtenu après ultrafiltration ou du rétentat obtenu après diafiltration.

Ce procédé permet de conduire à des compositions tout à fait originales et nouvelles présentant une activité de type systémique remarquable sur la croissance des plantes, sur l'élongation cellulaire, sur la germination des graines, et la physiologie des plantes, en augmentant leur potentiel énergétique.

Il semble que les propriétés particulières de ces compositions soient essentiellement dues à leur structure chimique originale directement liée à leur procédé d'obtention, et en particulier aux conditions tout à fait originales de l'hydrolyse basique (présence d'un réducteur, température et durée très précises).

On a en effet constaté que, si les conditions de l'hydrolyse spécifiées ci-dessus ne sont pas rigoureusement respectées, les compositions obtenues après neutralisation et filtration ne présentent plus les activités remarquables des compositions revendiquées.

Le procédé conforme à la présente invention s'applique généralement aux algues brunes (phéophycées), et en particulier aux fucales ou aux laminariales, de préférence du type Ascophyllum nodosum.

Ces algues peuvent être utilisées sous des formes variées. Le procédé conforme à l'invention s'applique en particulier aux algues fraîches, aux algues sèches, ou encore à des crèmes d'algues comme par exemple celles obtenues par cryobroyage suivant le procédé décrit dans le brevet français n° 74 35 162. Dans le cas des crèmes d'algues, on procèdera préalablement à l'hydrolyse à un traitement acide, par exemple en ajoutant à la crème un acide fort comme par exemple l'acide chlorhydrique.

Le réducteur utilisé dans le procédé conforme à l'invention est notamment un borohydrure de métal alcalin, en particulier le borohydrure de sodium.

D'autres réducteurs peuvent être utilisés. On citera en particulier les alumino-hydrures de métal alcalin comme par exemple l'alumino-hydrure de lithium.

Les conditions de température et de durée de l'étape d'hydrolyse constituent des paramètres critiques du procédé conforme à l'invention.

On a constaté expérimentalement que, pour parvenir aux résultats recherchés, la température doit être comprise entre 50°C et 100°C et la durée entre 4 et 8 h. Les conditions optimales d'hydrolyse semblent être d'environ 80°C pour la température et 6 h pour la durée.

L'étape de neutralisation qui suit l'étape d'hydrolyse est généralement réalisée par l'addition à l'hydrolysat d'un acide fort, comme par exemple l'acide chlorhydrique jusqu'à l'obtention d'un pH compris entre environ 6 et 8, de préférence d'environ 6,5.

L'hydrolysat neutralisé ainsi obtenu est clarifié par filtration sur une membrane présentant un diamètre de pore d'environ 0,45 µm.

Cette filtration sera de préférence une filtration tangentielle sur une membrane tubulaire carbone-céramique par exemple de type Carbosep.

Le perméat obtenu à l'issue de cette étape présente l'ensemble des caractéristiques des compositions conformes à l'invention.

Cependant, on peut prévoir des étapes complémentaires facultatives, et notamment la réduction à sa poudre du perméat obtenu à l'issue de la filtration ou bien encore une diafiltration ou une électrodialyse de ce perméat suivie éventuellement d'une réduction à sa poudre du rétentat ainsi obtenu.

Selon une caractéristique particulière, l'étape de diafiltration est réalisée sur une membrane de porosité nominale égale à 1 000 daltons, de préférence pendant une durée telle que le rétentat obtenu présente une résistivité d'au moins 100 ohms x cm, de préférence de 200 ohms x cm.

Selon une variante de réalisation, l'étape de diafiltration est remplacée par une étape d'électrodialyse réalisée sur une membrane non spécifique pendant une durée telle que le rétentat obtenu présente une résistivité d'au moins 100 ohms x cm, de préférence 200 ohms x cm.

Selon une caractéristique particulière du procédé conforme à l'invention, l'hydrolysat obtenu après hydrolyse ou éventuellement neutralisation, le perméat obtenu à l'issu de l'étape de filtration, ou encore le rétentat obtenu à l'issu de l'étape de diafiltration ou d'électrodialyse sera traité par de la polyvinyl pyrrolidone.

On a constaté d'une façon tout à fait surprenante et inattendue, qu'un tel traitement permet encore de potentialiser l'activité biologique des compositions conformes à l'invention.

Ce traitement consistera à faire réagir en solution de la polyvinyl pyrrolidone sur l'hydrolysat, le perméat ou le rétentat précité et à filtrer le mélange réactionnel ainsi obtenu.

Avantageusement, la polyvinyl pyrrolidone est mise en réaction à une concentration comprise entre 0,1 et 50 g/l de solution, de préférence à une concentration comprise entre 0,5 et 10 g/l et encore de préférence à une concentration de 5 g/l.

La réaction sera réalisée pendant une durée comprise entre 1 et 90 min et la filtration peut être réalisée soit par ultrafiltration ou microfiltration, soit sur un filtre à plaque horizontale.

Les compositions dérivées d'algues marines, susceptibles d'être obtenues par la mise en oeuvre du procédé décrit précédemment pourront être utilisées pour la préparation de compositions à usage agricole, en particulier pour la préparation de produits d'enrobage de semence ou d'engrais accélérant la croissance des plantes, en augmentant leur potentiel énergétique.

Dans ces utilisations, les compositions conformes à l'invention seront employées à des doses comprises entre 50 et 500 ml/quintal dans le cadre du traitement des semences, de 0,1 à 50 ml/l dans le cadre du traitement foliaire.

L'invention sera mieux comprise et d'autres buts, caractéristiques et avantages de celle-ci apparaîtront plus clairement à la lecture de la description explicative qui va suivre, faite en référence aux exemples illustratifs suivants.

### Exemple 1: Préparation d'une composition conforme à l'invention dérivée d'une crème d'algues

### Etape a

On soumet des algues fraîches de type Ascophyllum nodosum (Linné Lamouroux) à un cryobroyage (-40°C) suivant le procédé décrit dans le brevet français n° 74 35 162.

On obtient ainsi une crème dont le diamètre moyen des particules est inférieur à 20 µm.

A 800 ml de la crème ainsi obtenue, on ajoute progressivement sous agitation 1,2 l d'acide chlorhydrique (4 M). La durée totale d'agitation est de 15 min.

Après une phase de décantation d'environ 1 h, on sépare la phase liquide de la phase solide par centrifugation.

Le culot de centrifugation ainsi obtenu est rincé plusieurs fois par de l'eau déminéralisée jusqu'à ce que le pH du surnageant soit supérieur à 5.

### Etape b

On recueille le culot de centrifugation obtenu à l'issue de l'étape a. Dans cet exemple, ce culot est constitué de 500 g de masse solide présentant une teneur en matière sèche supérieure à 10%.

Le culot de centrifugation est hydrolysé par addition d'environ 2,5 l d'une base forte (KOH, 4 M) et par addition de 2,5 g de borohydrure de sodium (Na BH₄).

L'hydrolyse est réalisée au bain-marie à une température d'environ 80°C pendant 6 h sous agitation.

### Etape c

L'hydrolysat obtenu à l'issue de l'étape b est neutralisé par l'addition d'un acide fort (HCl, 37%) jusqu'à l'obtention d'un pH d'environ 6,5.

Dans cet exemple, on a ajouté environ 750 ml d'acide chlorhydrique à l'hydrolysat.

### Etape d

Le liquide neutre obtenu à l'issue de l'étape c est soumis à une clarification par filtration tangentielle sur une membrane tubulaire carbone-céramique de type Carbosep de porosité 0,45µm.

L'opération est réalisée en maintenant une pression de 1 bar sur la colonne de filtration.

On obtient ainsi un perméat présentant un volume d'environ 3 375 ml et un pH d'environ 6,5. La résistivité mesurée est de 10 ohms x cm.

### Etape e

Le perméat obtenu à l'issue de l'étape d est soumis à une diafiltration de façon à en éliminer les sels minéraux.

A cet effet, on a utilisé un système Pellicon commercialisé par la société Millipore équipé d'une cassette de porosité 1 000 daltons associée à une pompe Procon également commercialisée par la société Millipore.

On suit la diminution de la teneur ionique du filtrat en mesurant régulièrement la résistivité.

La diafiltration est poursuivie jusqu'à ce que la résistivité du rétentat soit d'environ 200 ohms x cm.

On obtient ainsi 3 375 ml de rétentat présentant un pH égal à 6,5.

### Etape f

Le rétentat obtenu à l'issue de l'étape e est soumis à une lyophilisation et l'on récupère ainsi environ 10,5 g de poudre sèche.

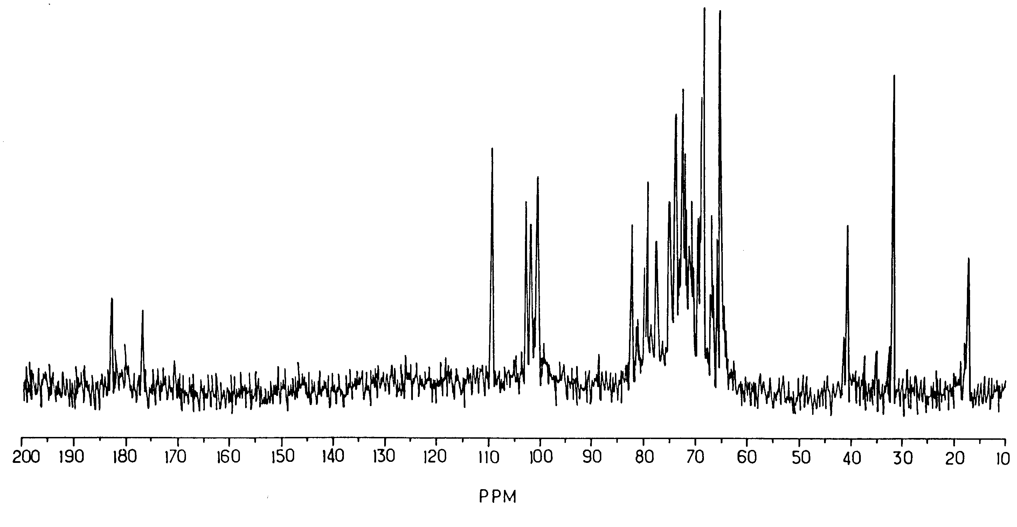

Le spectre RMN ¹³C de la composition est donné à la figure unique.

### Exemple 2: Traitement à la polyvinyl pyrrolidone

On traite un échantillon d'hydrolysat neutralisé obtenu en suivant le processus indiqué aux étapes a à c de l'exemple 1 par de la polyvinyl pyrrolidone à la dose d'environ 1% en poids.

A cet effet, 9,5 g de polyvinyl pyrrolidone (produit commercialisé sous la dénomination Polyclar®) sont introduits dans un volume de 350 ml d'hydrolysat.

On laisse la polyvinyl pyrrolidone s'épaissir pendant environ 2 h.

La solution ainsi obtenue est additionnée à environ 3 l d'hydrolysat neutralisé, le mélange étant maintenu sous agitation pendant 30 min, puis filtré sous vide sur un filtre Whatman GF/A.

Le liquide ainsi obtenu est soumis aux opérations de clarification, dessalement et mise en poudre respectivement décrites aux étapes d à f de l'exemple 1.

### Exemple 3: Dessalement par électrodialyse

On prépare 3 375 ml de perméat en suivant le protocole expérimental décrit aux étapes a à d de l'exemple 1.

L'élimination des sels minéraux est obtenue ici par électrodialyse.

A cet effet, on utilise un pilote de laboratoire à deux compartiments de type TS.2.10.P présentant une surface totale de cellule de 2 000 cm², et équipé d'une série de membranes standard.

Le mode de fonctionnement utilisé est le mode discontinu par recirculation sur une cuve.

Cet appareil est équipé de 3 réservoirs : 2 pour les produits et 1 pour les électrodes. Le volume unitaire utile est de 1,9 l. Il comprend en outre 3 pompes à entraînement magnétique de débit égal à 180 l/h.

On suit la diminution de la teneur ionique en mesurant la résistivité.

Au départ, le perméat présente une résistivité de 10 ohms x cm.

L'électrodialyse est réalisée pendant une durée suffisante pour obtenir une résistivité finale de 200 ohms x cm.

On récupère ainsi 3 375 ml d'un filtrat présentant un pH de 6,5 et une résistivité de 200 ohms x cm.

Ce filtrat peut être réduit à sa poudre par lyophilisation comme indiqué à l'étape f de l'exemple 1.

### Exemple 4: Composition selon l'invention dérivée d'algues fraîches

On soumet 500 g d'algues fraîches de type Ascophyllum nodosum (Linné Lamouroux) à une hydrolyse basique contrôlée en présence d'un réducteur.

Contrairement à la crème d'algues traitée à l'exemple 1, les algues fraîches peuvent être hydrolysées sans traitement préalable à l'acide.

L'hydrolyse est réalisée ici par addition de 2,5 l d'une base forte (KOH, 4 M) et de 2,5 g d'un réducteur (borohydrure de sodium) dans un bain-marie, à une température de 80°C pendant 6 h sous agitation.

L'hydrolysat ainsi obtenu est soumis au protocole expérimental décrit aux étapes b à e de l'exemple 1.

### Exemple 5: Composition conforme à l'invention dérivée d'algues sèches

On soumet 500 g d'algues sèches de type Ascophyllum nodosum (Linné Lamouroux) à un séchage à 50°C dans une étuve pendant une durée de 24 h.

On récupère ainsi 116 g d'algues fraîches qui sont ensuite broyés manuellement dans un mortier.

La poudre ainsi obtenue est ensuite soumise à une hydrolyse basique contrôlée en présence d'un réducteur.

L'hydrolyse est réalisée par addition de 2,5 l d'une base forte (KOH ; 4 M) et de 2,5 g d'un réducteur (borohydrure de sodium) dans un bain-marie à une température de 80°C pendant 6 h sous agitation.

L'hydrolysat ainsi obtenu est traité en suivant le protocole expérimental décrit aux étapes b à e de l'exemple 1.

### ETUDE DES PROPRIETES DES COMPOSITIONS SELON L'INVENTION

Les propriétés des compositions dérivées d'algues marines conformes à la présente invention ont été mises en évidence en effectuant les expériences décrites ci-après.

### Expérience 1 : Essai de pelliculage d'une composition conforme à l'invention sur une semence de pois protéagineux

On prépare 4 lots de 500 g de graines de pois (Ascoona) pelliculées à l'aide de solutions aqueuses comprenant un dispersant (produit commercialisé sous la dénomination Pellistac par la société La Quinoléine) et le produit obtenu à l'issue de l'étape e de l'exemple 1.

Les quantités respectives des constituants de la solution de pelliculage pour chaque lot sont mentionnées dans le tableau I ci-après.

**Tableau I**

| Lot | Produit de l'exemple (ml) | Dispersant (ml) | Eau déminéralisée (ml) |
|---|---|---|---|
| D₀ | 0 | 1 | 3 |
| D₁ | 0,5 | 1 | 2,5 |
| D₂ | 1 | 1 | 2 |
| D₃ | 2 | 1 | 1 |

### a) Mesure de germination

Les graines pelliculées comme indiqué précédemment ont été semées dans des pots remplis de sable de carrière, lavées, séchées et humidifiées à 9 pour 1 000 conformément à la norme ISTA.

Les semis ainsi réalisés sont recouverts d'un film de polypropylène pour créer un effet de serre et placés en chambre de culture à une température de 19°C.

Dans ces conditions, la levée s'effectue en 4 jours et l'expérience est arrêtée le 8ème jour après le semis.

On procède, pour chaque pot, aux trois observations suivantes :
- nombre de plantules levées ;
- poids frais du système racinaire ;
- poids frais de la jeune tige.

Le système racinaire, après arrachage des plantules fait l'objet d'un lavage et d'un essorage sur papier buvard avant la pesée.

Les résultats obtenus ont été reportés dans le tableau II ci-après.

**Tableau II**

| Lot | Poids frais des tiges (g) | en % | Poids frais des racines (g) | en % | % de germination |
|---|---|---|---|---|---|
| D₀ | 5,52 | 100 | 12,78 | 100 | 95 |
| D₁ | 5,95 | 107,8 | 13,88 | 108,6 | 95 |
| D₂ | 6,00 | 108,7 | 13,45 | 105,2 | 97 |
| D₃ | 5,83 | 105,6 | 13,60 | 106,4 | 97 |

Ces résultats font apparaître que les compositions dérivées d'algues conformes à la présente invention augmentent de façon significative les poids frais des tiges et des racines par rapport au témoin.

### b) Essai de croissance

Cinq graines de chaque lot D₀, D₁, D₂ et D₃ sont semées dans un conteneur de 2 l contenant du terreau "spécial semis" enrichi en engrais.

Ce processus est répété 4 fois.

Pour effectuer ces semis, on a choisi des graines de même calibre, sans cassure ni tégument.

Les conteneurs sont disposés en chambre de culture à une température de 19°C, une hygrométrie supérieure ou égale à 60% et avec une photopériode de 14 h le jour et 10 h la nuit.

L'arrosage des pots est calibré pendant tout le cycle végétatif en fonction du développement.

Six jours après le semis, on procède à une notation de précocité et à un comptage du nombre de plantes ayant levé.

Trente-trois jours après le semis, on procède à une nouvelle notation réalisée sur le stade de chaque plante, suivant la méthode suivante : la notation du nombre de noeuds auquel s'ajoute un système décimal pour la notation du dernier étage :
- 0,1 à 0,5 : vrille plus ou moins sortie
- 0,6 : stipule fermée, vrille sortie non étalée
- 0,7 : stipule fermée, vrille étalée
- 0,8 à 0,9 : stipule plus ou moins étalée.

Après cette notation, toutes les plantes d'un même container font l'objet d'une mesure du poids frais des parties aériennes et du poids sec après étuvage (48 h à 100°C).

Les résultats de toutes ces observations sont donnés dans le tableau III ci-dessous.

Dans ce tableau la lettre A indique qu'il n'y a aucune différence sur le critère mesuré entre les différents lots.

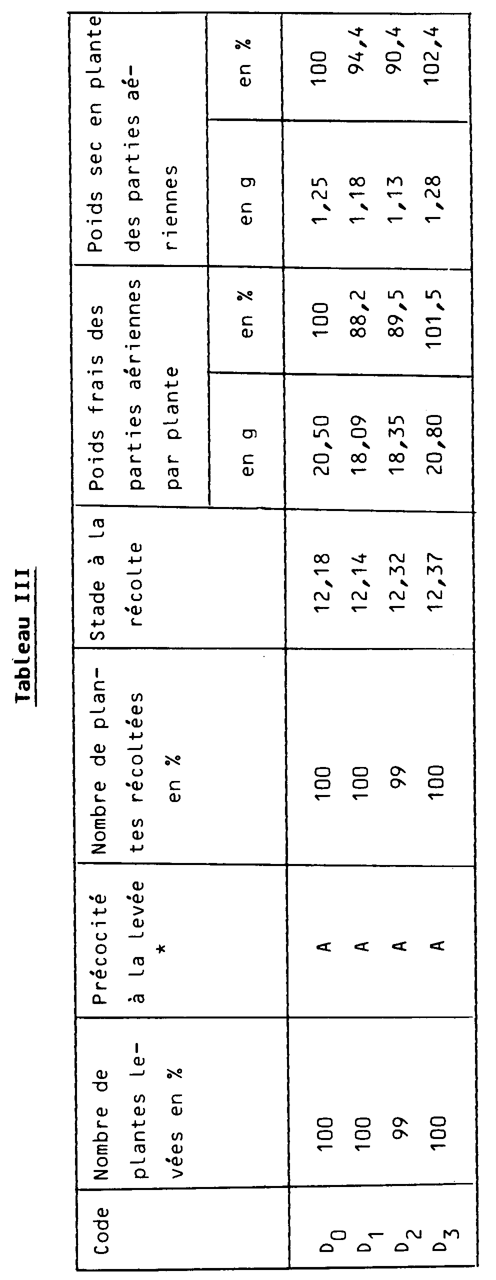

Ces résultats montrent que, pour les lots D₁ et D₂, la taille des tiges et feuilles est réduite par rapport au témoin et ceci de façon significative, alors qu'à la concentration D₃ ce phénomène est inversé.

### Expérience 2 : Essai de pulvérisation foliaire d'une composition obtenue à l'étape e selon l'exemple 1 sur des plants de tomates cultivés en chambre de culture

Des plants de tomates Rondello (hybride F1) sont disposés en chambre de culture dans les conditions suivantes :
- substrat spécial tomate photopériode : 16 h le jour ; 8 h la nuit
- température : constante à 18°C ;
- hygrométrie : 75% et plus jusqu'à l'apparition des premières fleurs puis 40 à 45% ;
- ventilation et recyclage d'air permanent.

Le produit obtenu à l'étape e de l'exemple 1 est testé à trois concentrations :
- D₁ : 1 pour 1 000 ;
- D₂ : 5 pour 1 000 ;
- D₃ : 10 pour 1 000.

L'eau déminéralisée est utilisée comme témoin (D₀).

Les produits testés sont pulvérisés sur les plants de tomates suivant le calendrier et les volumes de pulvérisation indiqués au tableau IV.

Chaque essai est répété quatre fois.

**Tableau IV**

| Jour | Volume pulvérisé par plant en ml |
|---|---|
| J0 | 4 |
| J0 ± 8 j | 6 |
| J0 ± 18 j | 10 |
| J0 ± 30 j | 15 |
| J0 ± 39 j | 20 |
| J0 ± 49 j | 26 |

Afin de limiter le développement végétatif et de vérifier l'incidence des traitements sur la fructification du premier bouquet, on procède à l'ablation des deuxième et troisième bouquets (deux feuilles au-dessus du premier bouquet) lorsqu'apparaissent les premières nouaisons des fruits sur le premier bouquet.

Concernant l'arrosage, chaque pot reçoit une quantité d'eau de 150 ml pour les deux jours jusqu' au sixième jour et, à partir du huitième jour, chaque pot est alimenté avec une solution fertilisante diluée dans de l'eau déminéralisée.

L'essai est arrêté le soixantième jour.

Trois observations ont été réalisées en cours de végétation :
a) avant la suppression des deuxième et troisième bouquets (J0 + 39 jours) on relève le nombre de boutons et leur état de floraison.
   Les résultats de cette observation sont regroupés au tableau V ci-après.
b) Au jour J0 + 49 jours, on compte le nombre de boutons floraux sur le premier bouquet.
   Les résultats de cette observation sont reportés au tableau VI ci-dessous.
c) Le jour de l'arrêt de l'essai (J0 + 60 jours) on compte pour chaque bouquet le nombre de fleurs, le nombre de fruits et le poids de chaque fruit.
   Les résultats de cette observation sont regroupés au tableau VII ci-après.

**Tableau V**

| Dose | Nombre de boutons sur le 3ème bouquet (fermés) | Nombre de boutons sur le 2ème bouquet | | Nombre de boutons sur le 1^{er} bouquet | |
|---|---|---|---|---|---|
| | | Fermés | Epanouis | Fermés | Epanouis |
| D₀ | 14 | 17 | 0 | 11 | 6 |
| D₁ | 12 | 17 | 0 | 14 | 9 |
| D₂ | 17 | 17 | 1 | 10 | 13 |
| D₃ | 22 | 21 | 1 | 8 | 12 + 1T* |

| | | | | | |
|---|---|---|---|---|---|
| * = 1 tomate formée | | | | | |

**Tableau VI**

| Doses | Nombre total de boutons floraux sur le 1^{er} bouquet |
|---|---|
| D₀ | 20 |
| D₁ | 22 |
| D₂ | 20 |
| D₃ | 24 |

**Tableau VII**

| Doses | Nombre de fruits | Taux de nouaison % | Poids frais total de fruits récoltés (g) | Nombre de fruits par classe de poids | | |
|---|---|---|---|---|---|---|
| | | | | Moins de 10 g | de 10,1 à 20 g | plus de 20 g |
| D₀ | 14 | 70 | 113,5 | 9 | 4 | 1 |
| D₁ | 18 | 86 | 157,7 | 9 | 8 | 1 |
| D₂ | 18 | 90 | 207,2 | 9 | 4 | 5 |
| D₃ | 22 | 92 | 222,7 | 12 | 8 | 2 |

On constate à la lecture des tableaux V à VII que la composition conforme à l'invention augmente considérablement le taux de nouaison (de 15 à 20% par rapport au témoin).

En outre cette composition a une action très nette sur la précocité de la floraison, le nombre de fleurs épanouies étant particulièrement plus important aux doses D₂ et D₃.

A la récolte, cette précocité de floraison est très bien reliée à la répartition des fruits par tranche de poids. La composition D₂ possède le plus de fruits de poids élevé, tandis que les compositions D₁ et D₃ ont le plus de fruits à calibre intermédiaire.

Dans tous les cas, le nombre de fruits est beaucoup plus important que pour le témoin.

### Expérience 3 : Test de germination de graines

La germination est une des phases essentielles de la vie d'une plante. Une bonne germination assure un bon départ pour sa croissance ultérieure et un bon développement racinaire lui confère à la fois une bonne nutrition minérale et une bonne adhérence au sol ou au substrat de culture.

La découverte d'une substance susceptible de stimuler la germination des semences et un bon développement de l'appareil racinaire apporte une contribution importante à l'agriculture.

On a évalué l'influence des compositions conformes à l'invention sur la germination des semences de la façon suivante : Sans trempage préalable, des semences de melon et de tomate sont mises à germer par lot de 10 dans des boîtes de Petri de 5 cm de diamètre :
- dans une solution aqueuse (lot témoin) ;
- dans une solution contenant des substances de croissance (kinetine ou acide indolacétique (AIA)) à des concentrations de 0,1 µM ou 1 µM ;
- dans une solution contenant une composition selon l'exemple 4, à différentes concentrations, ces dernières étant exprimées en µg d'équivalent en hexoses.

Les boîtes de Petri sont mises dans une enceinte à 25°C à l'obscurité.

On a regroupé au tableau VIII ci-après les résultats obtenus après 10 jours.

**Tableau VIII**

| Produit testé | % de germination | |
|---|---|---|
| | Melon | Tomate |
| Eau | 0 | 75 |
| Kin 1 µM | 0 | 0 |
| Kin 0,1 µM | | |
| AIA 1 µM | 0 | 0 |
| AIA 0,1 µM | 0 | 0 |
| Produit de l'exemple 1 8 µg/ml | 77 | 100 |
| Produit de l'exemple 2 8 µg/ml | 100 | 100 |
| Produit de l'exemple 4 8 µg/ml | 66 | 50 |

Ces résultats démontrent l'influence marquée des compositions conformes à l'invention sur la germination des graines.

### Expérience 4 : Elongation des coléoptiles de blé

Des graines de blé sont mises à germer à 25°C à l'obscurité.

Au bout de 3 jours, les coléoptiles atteignent 2,5 à 3 cm de longueur. Après l'excision des coléoptiles, des segments de 8 mm de longeur sont découpés.

Afin de déterminer si la zone apicale, siège de production endogène d'auxine va interférer en synergie ou en antagonisme avec les compositions conformes à l'invention, 2 lots ont été testés l'un comportant la zone apicale, l'autre n'en comportant pas.

Pour chaque expérience et pour chaque dose de composition à tester, 2 lots de 10 fragments de coléoptiles sont mis en présence de 5 ml d'une solution aqueuse de composition à tester, dans des boîtes de Petri de 5 cm de diamètre.

L'élongation est mesurée après 20 h d'incubation à l'obscurité à 25°C.

Les résultats obtenus montrent que les compositions conformes à l'invention ont une activité très favorable sur l'élongation des coléoptiles. Ces compositions agissent donc comme des régulateurs de croissance.

### Expérience 5 : Activité biostimulante du produit de l'exemple 1 sur les plants de tomates en croissance.

Dans ce qui suit on désignera par "produit 1" le produit obtenu sous forme de poudre à l'issue de l'exemple 1.

### Méthodologie :

L'action du produit 1 a été étudiée sur des plants de tomate possédant une dizaine de feuilles, traités par pulvérisation de ce produit avec une solution à 0,1%.

On a effectué des observations ultrastructurales au niveau du limbe foliaire des cellules de l'épiderme supérieur et du parenchyme photosynthétique et de leurs organites.

Ces observations ont été réalisées sur des microphotographies.

Les valeurs moyennes du nombre, de la taille, de la surface des organites et/ou de leurs sous-structures ont été calculées avec un coefficient de sécurité de 95%. Elles sont exprimées avec leur déviation standard (m + XSm).

Les observations ultrastructurales ont toujours été réalisées sur les folioles de la quatrième feuille comptée à partir de la base des plants et ont porté sur les cinq lots suivants :
T1 : ultrastructure foliaire de plants témoins non traités ;
T2 : ultrastructure foliaire 4 h après le traitement de toute la plante ;
E1 : ultrastructure de la 4ème feuille, non traitée, 1 h après le traitement des trois feuilles qui lui sont inférieures ;
E2 : ultrastructure de la 4ème feuille, non traitée, 4 h après le traitement des trois feuilles qui lui sont inférieures ;
E3 : ultrastructure de la foliole terminale non traitée, 1 h après le traitement des 4 autres folioles de la 4ème feuille.

### Résultats :

Les résultats des observations réalisées ont été résumés dans le tableau suivant :

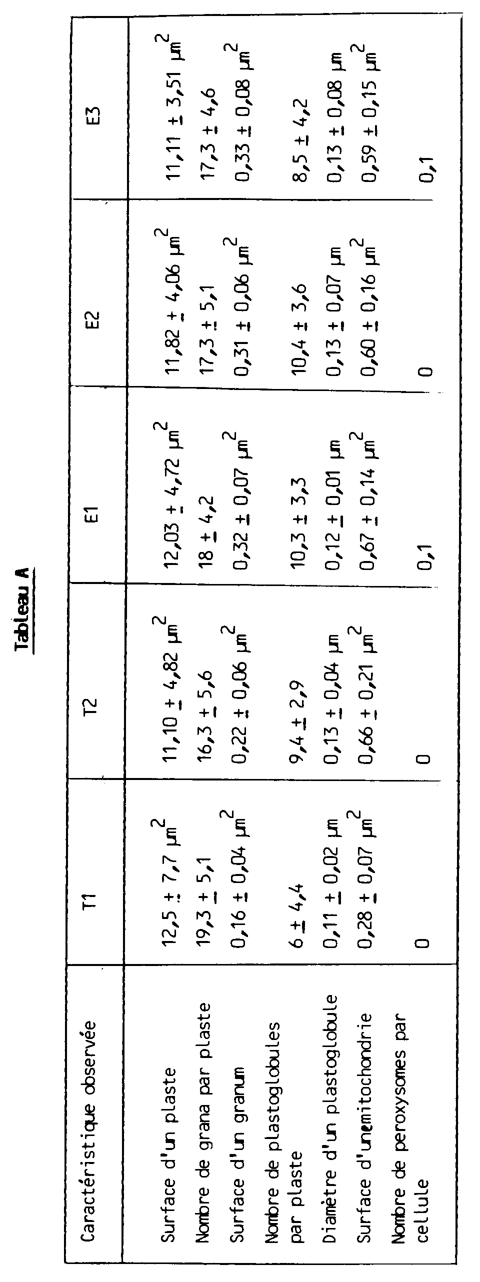

### Interprétation :

La comparaison visuelle des planches relatives aux plants non traités (T1) et à ceux soumis à une pulvérisation atteignant la plante entière (T2) révèle d'emblée des mitochondries plus volumineuses et des grana sensiblement plus grands chez les plantes traitées. Il convient également de noter l'aspect dilaté des thylacoïdes chez les plants soumis à l'action du produit 1.

La comparaison des valeurs numériques des ultrastructures des lots T1 et T2 confirme ces observations :
le produit 1 a une action hautement significative sur la surface moyenne d'une mitochondrie qui passe de 0,28 ± 0,07 µm² à 0,66 ± 0,21 µm² ; le produit provoque donc un taux d'accroissement de 135,7% de la surface mitochondriale.

Il induit en outre une augmentation significative de la surface d'un granum qui passe de 0,16 ± 0,04 µm² à 0,22 ± 0,06 µm², le taux d'accroissement est de 37,5%.

Par ailleurs une analyse comparée des surfaces moyennes des mitochondries et des grana des 5 lots des plants (cf. tableau ci-dessous), montre les différences très hautement significatives entre les essais E1, E2, E3 et le témoin (T1) (non traité).

| | mitochondrie | granum |
|---|---|---|
| T1 | 0,28 ± 0,07 | 0,16 ± 0,04 |
| T2 | 0,66 ± 0,21 | 0,22 ± 0,06 |
| E1 | 0,67 ± 0,14 | 0,32 ± 0,07 |
| E2 | 0,60 ± 0,16 | 0,31 ± 0,06 |
| E3 | 0,59 ± 0,15 | 0,33 ± 0,08 |
| (surfaces en µm²) | | |

Ces différences traduisent une augmentation de la surface des organites chez les plants soumis à des traitements partiels.

On note même un accroissement plus important des grana par rapport à celui observé chez les plants traités entièrement.

Ces observations traduisent sans équivoque que les limbes foliaires non traités ont modifié leurs ultrastructures de la même manière que ceux directement soumis au contact du produit. Ces modifications ultrastructurales des zones non traitées plaident en faveur d'un transport à longue distance du produit 1 et donc d'une activité systémique de ce produit.

Le produit P1 appliqué par pulvérisation à la dose de 0,1% sur des plants de tomate en croissance pénètre rapidement (moins de 1 h), en partie ou totalité, dans les cellules des limbes foliaires. On note donc une bonne perméabilité cellulaire de ce produit.

Les cibles qu'il atteint sont, au moins, les plastes et les mitochondries.

L'accroissement de la surface des grana, lieux privilégiés de l'accumulation des pigments photosynthétiques, conduit à une augmentation du taux de chlorophylle a et à une élévation de l'activité photosynthétique.

L'augmentation spectaculaire de la surface mitochondriale conduit à une élévation du quotient respiratoire.

L'action conjuguée de l'amélioration des métabolismes photosynthétique et respiratoire se traduit par une meilleure assimilation du gaz carbonique et une élévation du bilan énergétique des cellules par la synthèse d'adénosine-tri-phosphate (ATP).

## Revendications

1. Procédé de préparation de compositions dérivées d'algues marines, caractérisé en ce qu'il comprend :
a) l'hydrolyse basique d'au moins une algue brune, de préférence choisie parmi les fucales ou les laminariales, en présence d'un réducteur comme par exemple un borohydrure de métal alcalin, à une température comprise entre 50 et 100°C, et de préférence d'environ 80°C, pendant une durée comprise entre 4 et 8 h, de préférence d'environ 6 h ;
b) la neutralisation de l'hydrolysat ainsi obtenu, de préférence par l'addition d'un acide fort jusqu'à l'obtention d'un pH compris entre environ 6 et 8 ;
c) une filtration, de préférence sur une membrane minérale dont le diamètre de pore est d'environ 0,45 µm ;
d) éventuellement une diafiltration ou une électrodialyse du perméat obtenu à l'issue de l'étape c) ; et
e) éventuellement une réduction à sa poudre du perméat obtenu à l'issue de l'étape c), ou du rétentat obtenu à l'issue de l'étape d).

2. Procédé selon la revendication 1, caractérisé en ce qu'il comprend en outre un traitement à la polyvinyl pyrrolidone :
- soit de l'hydrolysat obtenu à l'issue de l'étape a) ;
- soit de l'hydrolysat neutralisé obtenu à l'issue de l'étape b) ;
- soit du perméat obtenu à l'issue de l'étape de filtration c) ;
- soit du rétentat obtenu à l'issue de l'étape de diafiltration ou d'électrodialyse d).

3. Procédé selon la revendication 1 ou 2, caractérisé en ce que l'étape de diafiltration précitée est réalisée sur une membrane de porosité nominale égale à 1 000 daltons, de préférence pendant une durée telle que le rétentat obtenu présente une résistivité d'au moins 100 ohms x cm, de préférence de 200 ohms x cm.

4. Procédé selon la revendication 1 ou 2, caractérisé en ce que l'étape d'électrodialyse précitée est réalisée sur une membrane non spécifique pendant une durée telle que le rétentat obtenu présente une résistivité d'au moins 100 ohms x cm, de préférence 200 ohms x cm.

5. Compositions dérivées d'algues marines, susceptibles d'être obtenues par la mise en oeuvre du procédé selon l'une quelconque des revendications 1 à 4.

6. Utilisation des compositions dérivées d'algues selon la revendication 5, pour la préparation de compositions à usage agricole.

7. Utilisation selon la revendication 6, pour la préparation d'un produit d'enrobage de semence et d'éléments de composition de cet enrobage.

8. Utilisation selon la revendication 6, pour la préparation d'un engrais accélérant la croissance de la plante, en augmentant le potentiel énergétique des semences et des plantes.

## Claims

1. Process for the preparation of compositions derived from marine algae, characterized in that it comprises:
a) the basic hydrolysis of at least one brown algae, preferably chosen from the Fucales or the Laminariales, in the presence of a reducing agent such as, for example, an alkali metal borohydride, at a temperature of between 50 and 100°C, and preferably of approximately 80°C, for a period of time of between 4 and 8 h, preferably of approximately 6 h;
b) the neutralization of the hydrolysate thus obtained, preferably by the addition of a strong acid until a pH between approximately 6 and 8 is obtained;
c) a filtration, preferably through an inorganic membrane whose pore diameter is approximately 0.45 µm;
d) optionally a diafiltration or an electrodialysis of the permeate obtained at the end of Stage c); and
e) optionally a reduction to its powder of the permeate obtained at the end of Stage c), or of the retentate obtained at the end of Stage d).

2. Process according to Claim 1, characterized in that it additionally comprises a treatment with polyvinylpyrrolidone:
- either of the hydrolysate obtained at the end of Stage a);
- or of the neutralized hydrolysate obtained at the end of Stage b);
- or of the permeate obtained at the end of the filtration Stage c);
- or of the retentate obtained at the end of the diafiltration or electrodialysis Stage d).

3. Process according to Claim 1 or 2, characterized in that the abovementioned diafiltration stage is carried out through a membrane with a nominal porosity equal to 1000 daltons, preferably for a period of time such that the retentate obtained has a resistivity of at least 100 ohms × cm, preferably of 200 ohms × cm.

4. Process according to Claim 1 or 2, characterized in that the abovementioned electrodialysis stage is carried out through a non-specific membrane for a period of time such that the retentate obtained has a resistivity of at least 100 ohms × cm, preferably 200 ohms × cm.

5. Compositions derived from marine algae, capable of being obtained by the use of the process according to any one of Claims 1 to 4.

6. Use of the compositions derived from algae according to Claim 5, for the preparation of compositions having agricultural use.

7. Use according to Claim 6, for the preparation of a seed coating product and of composition components of this coating.

8. Use according to Claim 6, for the preparation of a fertilizer which accelerates seedling growth, by increasing the energetic potential of the seeds and of the seedlings.

## Patentansprüche

1. Verfahren zur Herstellung von Zusammensetzungen, die von Meeresalgen herrühren, **gekennzeichnet** durch die Stufen:
a) basische Hydrolyse mindestens einer Braunalge, bevorzugt ausgewählt aus den Arten Fucales oder Laminariales, in Gegenwart eines Reduktionsmittels, wie beispielsweise eines Alkalimetall-Borhydrids, bei einer Temperatur zwischen 50 und 100°C, und bevorzugt von ungefähr 80°C, während eines Zeitraums zwischen 4 und 8 Stunden, bevorzugt ungefähr 6 Stunden;
b) Neutralisation des so erhaltenen Hydrolysats, bevorzugt durch Zugabe einer starken Säure, bis zum Erhalt eines pH-Werts zwischen ungefähr 6 und 8;
c) Filtration, bevorzugt auf einer mineralischen Membran, deren Porendurchmesser ungefähr 0,45 µm beträgt;
d) gegebenenfalls Diafiltration oder Elektrodialyse des in der Stufe c) erhaltenen Permeats; und
e) gegebenenfalls Reduktion des in der Stufe c) erhaltenen Permeats zu Pulver, oder des in der Stufe d) erhaltenen Retentats.

2. Verfahren nach Anspruch 1, dadurch **gekennzeichnet,** daß es weiterhin eine Behandlung:
- entweder des in Stufe a) erhaltenen Hydrolysats;
- oder des in Stufe b) erhaltenen neutralisierten Hydrolysats;
- oder des in der Filtrationsstufe c) erhaltenen Permeats;
- oder des in der Stufe der Diafiltration oder Elektrodialyse d) erhaltenen Retentats
mit Polyvinylpyrrolidon umfaßt.

3. Verfahren nach Anspruch 1 oder 2, dadurch **gekennzeichnet,** daß man die Stufe der Diafiltration auf einer Membran mit einer 1000 Dalton entsprechenden Porosität bevorzugt solange durchführt, bis das erhaltene Retentat einen spezifischen Widerstand von mindestens 100 Ohm x cm, bevorzugt 200 Ohm x cm aufweist.

4. Verfahren nach Anspruch 1 oder 2, dadurch **gekennzeichnet,** daß man die Stufe der Elektrodialyse auf einer nicht spezifischen Membran solange durchführt, bis das erhaltene Retentat einen spezifischen Widerstand von mindestens 100 Ohm x cm, bevorzugt 200 Ohm x cm aufweist.

5. Von Meeralgen herrührende Zusammensetzungen, erhältlich durch das Verfahren nach einem der Ansprüche 1 bis 4.

6. Verwendung der von Algen herrührenden Zusammensetzungen nach Anspruch 5, zur Herstellung von Zusammensetzungen zur Verwendung in der Landwirtschaft.

7. Verwendung nach Anspruch 6, zur Herstellung eines Überzugs für Saatgut und von Bestandteilen des Überzugs.

8. Verwendung nach Anspruch 6, zur Herstellung eines Düngemittels, das das Wachstum der Pflanze beschleunigt, indem es das energetische Potential des Saatguts und der Pflanzen erhöht.
